# FASCICULE DE BREVET EUROPEEN

(11) **EP 3 391 451 B1**
(45) Date de publication et mention de la délivrance du brevet: **15.03.2023**
(21) Numéro de dépôt: 16809071.0
(22) Date de dépôt: 12.12.2016
(51) Int. Cl.: H01M 8/248, H01M 8/2428, C25B 1/00, C25B 1/04, C25B 9/65, C25B 9/73, C25B 9/75, C25B 11/036

(54) **SYSTÈME DE SERRAGE AUTONOME D'UN EMPILEMENT À OXYDES SOLIDES DE TYPE SOEC/SOFC À HAUTE TEMPÉRATURE**
EIGENSTÄNDIGES SYSTEM ZUM KLEMMEN EINES HOCHTEMPERATUR-SOEC/SOFC-STAPELS
STAND-ALONE SYSTEM FOR CLAMPING A HIGH-TEMPERATURE SOEC/SOFC STACK

(30) Priorité: 15.12.2015 FR 1562384
(43) Date de publication de la demande: 24.10.2018
(73) Titulaire: Commissariat à l'Energie Atomique et aux Energies Alternatives, 75015 Paris (FR)
(72) Inventeur: REYTIER, Magali, 38250 Villard De Lans (FR); BERNARD, Charlotte, 74130 Contamine Sur Arve (FR); GIROUD, Pascal, 38410 Saint Martin D'uriage (FR)
(74) Mandataire: Brevalex
(86) Numéro de dépôt international: PCT/EP2016/080655
(87) Numéro de publication internationale: WO 2017/102657

(56) Documents cités:
- EP-A1- 2 647 076
- EP-A2- 2 595 231
- WO-A2-01/13450
- JP-A- H07 145 492
- JP-A- 2007 294 330
- JP-B2- 3 465 379
- US-A1- 2002 142 204
- US-A1- 2010 012 503
- US-A1- 2012 325 654
- US-A1- 2014 242 492
- US-A1- 2015 311 559

## Description

### DOMAINE TECHNIQUE

La présente invention se rapporte au domaine général de l'électrolyse de l'eau à haute température (EHT), en particulier l'électrolyse de la vapeur d'eau à haute température (EVHT), respectivement désignées par les appellations anglaises « High Temperature Electrolysis » (HTE) et « High Temperature Steam Electrolysis » (HTSE), de l'électrolyse du dioxyde de carbone (CO₂), voire encore de la co-électrolyse de l'eau à haute température (EHT) avec le dioxyde de carbone (CO₂).

Plus précisément, l'invention se rapporte au domaine des électrolyseurs à oxydes solides à haute température, désignés habituellement par l'acronyme SOEC (pour « Solide Oxide Electrolyzer Cell » en anglais).

Elle concerne également le domaine des piles à combustible à oxydes solides à haute température, désignées habituellement par l'acronyme SOFC (pour « Solid Oxide Fuel Cells » en anglais).

Ainsi, de façon plus générale, l'invention se réfère au domaine des empilements à oxydes solides de type SOEC/SOFC fonctionnant à haute température.

Plus précisément, l'invention concerne un système de serrage autonome d'un empilement à oxydes solides de type SOEC/SOFC fonctionnant à haute température, un ensemble comportant un empilement à oxydes solides de type SOEC/SOFC et un tel système de serrage de cet l'empilement, ainsi qu'un procédé associé de fabrication d'un tel empilement.

### ÉTAT DE LA TECHNIQUE ANTÉRIEURE

Dans le cadre d'un électrolyseur à oxydes solides à haute température de type SOEC, il s'agit de transformer par le biais d'un courant électrique, au sein d'un même dispositif électrochimique, la vapeur d'eau (H₂O) en dihydrogène (H₂) et en dioxygène (O₂), et/ou encore de transformer le dioxyde de carbone (CO₂) en monoxyde de carbone (CO) et en dioxygène (O₂). Dans le cadre d'une pile à combustible à oxydes solides à haute température de type SOFC, le fonctionnement est inverse pour produire un courant électrique et de la chaleur en étant alimentée en dihydrogène (H₂) et en dioxygène (Oz), typiquement en air et en gaz naturel, à savoir par du méthane (CH₄). Par souci de simplicité, la description suivante privilégie le fonctionnement d'un électrolyseur à oxydes solides à haute température de type SOEC réalisant l'électrolyse de l'eau. Toutefois, ce fonctionnement est applicable à l'électrolyse du dioxyde de carbone (CO₂), voire encore de la co-électrolyse de l'eau à haute température (EHT) avec le dioxyde de carbone (CO₂). De plus, ce fonctionnement est transposable au cas d'une pile à combustible à oxydes solides à haute température de type SOFC.

Pour réaliser l'électrolyse de l'eau, il est avantageux de la réaliser à haute température, typiquement entre 600 et 1000°C, parce qu'il est plus avantageux d'électrolyser de la vapeur d'eau que de l'eau liquide et parce qu'une partie de l'énergie nécessaire à la réaction peut être apportée par de la chaleur, moins chère que l'électricité.

Pour mettre en oeuvre l'électrolyse de l'eau à haute température (EHT), un électrolyseur à oxydes solides à haute température de type SOEC est constitué d'un empilement de motifs élémentaires comportant chacun une cellule d'électrolyse à oxyde solide, ou encore cellule électrochimique, constituée de trois couches anode/électrolyte/cathode superposées l'une sur l'autre, et de plaques d'interconnexion en alliages métalliques, aussi appelées plaques bipolaires ou interconnecteurs. Chaque cellule électrochimique est enserrée entre deux plaques d'interconnexion. Un électrolyseur à oxydes solides à haute température de type SOEC est alors un empilement alterné de cellules électrochimiques et d'interconnecteurs. Une pile à combustible à oxydes solides à haute température de type SOFC est constituée du même type d'empilement de motifs élémentaires. Cette technologie à haute température étant réversible, le même empilement peut fonctionner en mode électrolyse et produire de l'hydrogène et de l'oxygène à partir d'eau et d'électricité, ou en mode pile à combustible et produire de l'électricité à partir d'hydrogène et d'oxygène.

Chaque cellule électrochimique correspond à un assemblage électrolyte/électrodes, qui est typiquement un assemblage multicouche en céramique dont l'électrolyte est formé par une couche centrale conductrice d'ions, cette couche étant solide, dense et étanche, et enserrée entre les deux couches poreuses formant les électrodes. Il est à noter que des couches supplémentaires peuvent exister, mais qui ne servent qu'à améliorer l'une ou plusieurs des couches déjà décrites.

Les dispositifs d'interconnexion, électrique et fluidique, sont des conducteurs électroniques qui assurent, d'un point de vue électrique, la connexion de chaque cellule électrochimique de motif élémentaire dans l'empilement de motifs élémentaires, garantissant le contact électrique entre une face et la cathode d'une cellule et entre l'autre face et l'anode de la cellule suivante, et d'un point de vue fluidique, combinant ainsi la production de chacune des cellules. Les interconnecteurs assurent ainsi les fonctions d'amenée et de collecte de courant électrique et délimitent des compartiments de circulation des gaz, pour la distribution et/ou la collecte.

Plus précisément, les interconnecteurs ont pour fonction principale d'assurer le passage du courant électrique mais aussi la circulation des gaz au voisinage de chaque cellule (à savoir : vapeur d'eau injectée, hydrogène et oxygène extraits pour l'électrolyse EHT ; air et combustible dont l'hydrogène injecté et eau extraite pour une pile SOFC), et de séparer les compartiments anodiques et cathodiques de deux cellules adjacentes, qui sont les compartiments de circulation des gaz du côté respectivement des anodes et des cathodes des cellules.

En particulier, pour un électrolyseur à oxydes solides à haute température de type SOEC, le compartiment cathodique comporte la vapeur d'eau et l'hydrogène, produit de la réaction électrochimique, tandis que le compartiment anodique comporte un gaz drainant, si présent, et de l'oxygène, autre produit de la réaction électrochimique. Pour une pile à combustible à oxydes solides à haute température de type SOFC, le compartiment anodique comporte le carburant, tandis que le compartiment cathodique comporte le comburant.

Pour réaliser l'électrolyse de la vapeur d'eau à haute température (EHT), on injecte de la vapeur d'eau (H₂O) dans le compartiment cathodique. Sous l'effet du courant électrique appliqué à la cellule, la dissociation des molécules d'eau sous forme de vapeur est réalisée à l'interface entre l'électrode à hydrogène (cathode) et l'électrolyte : cette dissociation produit du gaz dihydrogène (H₂) et des ions oxygène (O²⁻). Le dihydrogène (H₂) est collecté et évacué en sortie de compartiment à hydrogène. Les ions oxygène (O²⁻) migrent à travers l'électrolyte et se recombinent en dioxygène (O₂) à l'interface entre l'électrolyte et l'électrode à oxygène (anode). Un gaz drainant, tel que de l'air, peut circuler au niveau de l'anode et ainsi collecter l'oxygène généré sous forme gazeuse à l'anode.

Pour assurer le fonctionnement d'une pile à combustible à oxydes solides (SOFC), on injecte de l'air (oxygène) dans le compartiment cathodique de la pile et de l'hydrogène dans le compartiment anodique. L'oxygène de l'air va se dissocier en ions O²⁻. Ces ions vont migrer dans l'électrolyte de la cathode vers l'anode pour oxyder l'hydrogène et former de l'eau avec une production simultanée d'électricité. En pile SOFC, tout comme en électrolyse SOEC, la vapeur d'eau se trouve dans le compartiment de dihydrogène (H₂). Seule la polarité est inversée.

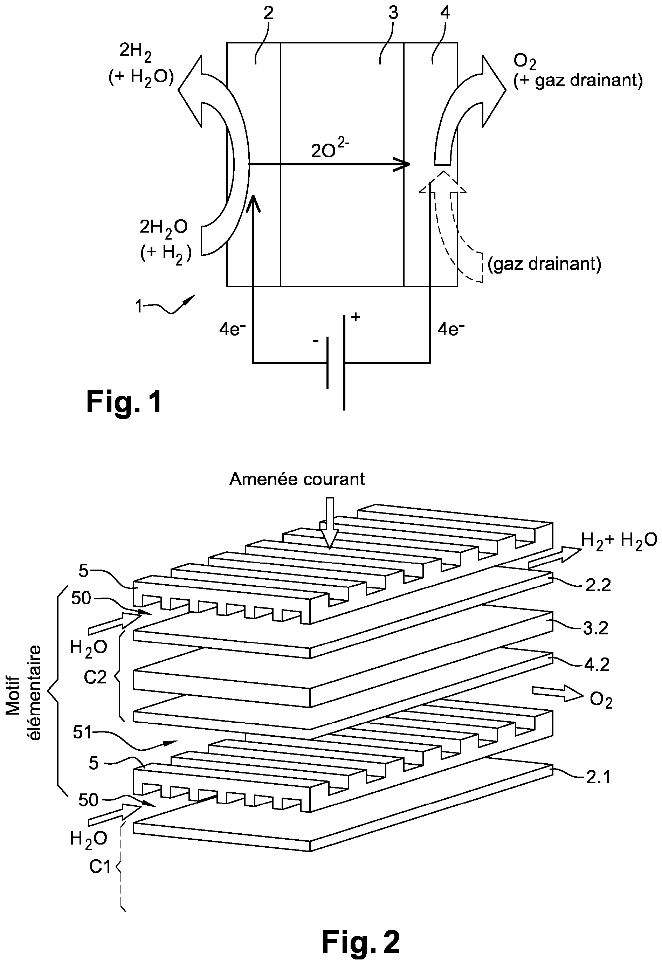

A titre d'illustration, la figure 1 représente une vue schématique montrant le principe de fonctionnement d'un électrolyseur à oxydes solides à haute température de type SOEC. La fonction d'un tel électrolyseur est de transformer la vapeur d'eau en hydrogène et en oxygène selon la réaction électrochimique suivante :

2 H₂O → 2 H₂ + O₂.

Cette réaction est réalisée par voie électrochimique dans les cellules de l'électrolyseur. Comme schématisée sur la figure 1, chaque cellule d'électrolyse élémentaire 1 est formée d'une cathode 2 et d'une anode 4, placées de part et d'autre d'un électrolyte solide 3. Les deux électrodes (cathode et anode) 2 et 4 sont des conducteurs électroniques et/ou ioniques, en matériau poreux, et l'électrolyte 3 est étanche au gaz, isolant électronique et conducteur ionique. L'électrolyte 3 peut être en particulier un conducteur anionique, plus précisément un conducteur anionique des ions O²⁻ et l'électrolyseur est alors dénommé électrolyseur anionique, par opposition aux électrolytes protoniques (H⁺).

Les réactions électrochimiques se font à l'interface entre chacun des conducteurs électroniques et le conducteur ionique.

A la cathode 2, la demi-réaction est la suivante :

2 H₂O + 4 e⁻ → 2 H₂ + 2 O²⁻.

A l'anode 4, la demi-réaction est la suivante:

2 O²⁻ → O₂ + 4 e⁻.

L'électrolyte 3, intercalé entre les deux électrodes 2 et 4, est le lieu de migration des ions O²⁻ sous l'effet du champ électrique créé par la différence de potentiel imposée entre l'anode 4 et la cathode 2.

Comme illustré entre parenthèses sur la figure 1, la vapeur d'eau en entrée de cathode peut être accompagnée d'hydrogène H₂ et l'hydrogène produit et récupéré en sortie peut être accompagné de vapeur d'eau. De même, comme illustré en pointillés, un gaz drainant, tel que l'air, peut en outre être injecté en entrée pour évacuer l'oxygène produit. L'injection d'un gaz drainant a pour fonction supplémentaire de jouer le rôle de régulateur thermique.

Un électrolyseur, ou réacteur d'électrolyse, élémentaire est constitué d'une cellule élémentaire telle que décrite ci-dessus, avec une cathode 2, un électrolyte 3, et une anode 4, et de deux interconnecteurs qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des interconnecteurs. L'ensemble est positionné entre deux plaques d'interconnexion d'extrémité qui supportent les alimentations électriques et des alimentations en gaz de l'électrolyseur (réacteur d'électrolyse).

Un électrolyseur à oxydes solides à haute température de type SOEC comprend ainsi au moins une, généralement une pluralité de cellules d'électrolyse empilées les unes sur les autres, chaque cellule élémentaire étant formée d'un électrolyte, d'une cathode et d'une anode, l'électrolyte étant intercalé entre l'anode et la cathode.

Comme indiqué précédemment, les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, le compartiment dit cathodique a pour fonction la distribution du courant électrique et de la vapeur d'eau ainsi que la récupération de l'hydrogène à la cathode en contact.

Le compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur à oxydes solides à haute température de type SOEC selon l'art antérieur. Cet électrolyseur comporte une pluralité de cellules d'électrolyse élémentaires C1, C2, de type à oxydes solides (SOEC), empilées alternativement avec des interconnecteurs 5. Chaque cellule C1, C2 est constituée d'une cathode 2.1, 2.2 et d'une anode (seule l'anode 4.2 de la cellule C2 est représentée), entre lesquelles est disposé un électrolyte (seul l'électrolyte 3.2 de la cellule C2 est représenté).

L'interconnecteur 5 est un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. La collecte de l'hydrogène produit et de la vapeur d'eau résiduelle à la cathode 2.1, 2.2 est effectuée dans le compartiment cathodique 50 en aval de la cellule C1, C2 après dissociation de la vapeur d'eau par celle-ci. La collecte de l'oxygène produit à l'anode 4.2 est effectuée dans le compartiment anodique 51 en aval de la cellule C1, C2 après dissociation de la vapeur d'eau par celle-ci. L'interconnecteur 5 assure le passage du courant entre les cellules C1 et C2 par contact direct avec les électrodes adjacentes, c'est-à-dire entre l'anode 4.2 et la cathode 2.1.

Les conditions de fonctionnement d'un électrolyseur à oxydes solides à haute température (SOEC) étant très proches de celles d'une pile à combustible à oxydes solides (SOFC), les mêmes contraintes technologiques se retrouvent.

Ainsi, le bon fonctionnement de tels empilements à oxydes solides de type SOEC/SOFC fonctionnant à haute température requiert principalement de satisfaire aux points énoncés ci-après.

Tout d'abord, il est nécessaire d'avoir une isolation électrique entre deux interconnecteurs successifs sous peine de court-circuiter la cellule électrochimique, mais aussi un bon contact électrique et une surface de contact suffisante entre une cellule et un interconnecteur. La plus faible résistance ohmique possible est recherchée entre cellules et interconnecteurs. Celle-ci dépend des matériaux en regard mais également du niveau de serrage de l'empilement.

Par ailleurs, il faut disposer d'une étanchéité entre les compartiments anodiques et cathodiques sous peine d'avoir une recombinaison des gaz produits entraînant une baisse de rendement et surtout l'apparition de points chauds endommageant l'empilement. De nouveau, cette étanchéité dépend de la conception des joints et des matériaux utilisés mais également du niveau de serrage de l'empilement.

Enfin, il est indispensable d'avoir une bonne distribution des gaz à la fois en entrée et en récupération des produits sous peine de perte de rendement, d'inhomogénéité de pression et de température au sein des différents motifs élémentaires, voire de dégradations rédhibitoires des cellules électrochimiques.

Par ailleurs, une contrainte importante est également de gérer au mieux les régimes de fonctionnement thermiques d'une pile à combustible à oxydes solides (SOFC) au sein de laquelle la réaction d'oxydation de l'hydrogène est très exothermique, ou d'un électrolyseur à oxydes solides à haute température (SOEC) où la réaction globale peut être soit exothermique, soit endothermique, soit globalement isotherme (fonctionnement autotherme) selon le potentiel de fonctionnement.

Le point de fonctionnement retenu fixe les conditions thermiques de l'empilement de cellules électrochimiques.

En effet, pour les électrolyses réalisées à haute température, l'énergie ΔH nécessaire à la dissociation de la molécule d'entrée, à savoir H₂O et/ou CO₂, peut être apportée sous forme électrique et/ou de chaleur. L'énergie thermique Q. apportée se définit alors en fonction de la tension U aux bornes de chaque cellule et de l'intensité I par l'équation suivante : Q = ΔH × (I/2F) - U × I, dans laquelle F représente la constante de Faraday.

Ainsi, comme indiqué précédemment, on définit trois régimes de fonctionnement pour un électrolyseur à oxydes solides à haute température (SOEC), correspondant à trois conditions thermiques différentes pour l'empilement :
- mode autothermique : la tension imposée Uᵢₘₚ est égale à ΔH/2F. La chaleur consommée par la réaction de dissociation est complètement compensée par les différentes résistances électriques de l'électrolyseur. L'électrolyseur n'a pas besoin de gestion thermique particulière tout en restant stable en température ;
- mode endothermique : la tension imposée Uᵢₘₚ est inférieure à ΔH/2F. L'électrolyseur consomme plus de chaleur que les pertes électriques en son sein. Ce mode de fonctionnement peut entraîner de fortes variations de température au sein de l'empilement ;
- mode exothermique : la tension imposée Uᵢₘₚ est supérieure à ΔH/2F. L'électrolyseur consomme alors moins de chaleur que les pertes électriques par effet Joule. Ce mode de fonctionnement entraîne à nouveau de fortes variations de température au sein de l'empilement.

Le fonctionnement pour une pile à combustible à oxydes solides (SOFC) sous hydrogène est quant à lui toujours exothermique.

Cependant, il est à noter que le fonctionnement pour une pile à combustible à oxydes solides (SOFC) alimentée en gaz naturel, en particulier par du méthane (CH₄), nécessite des précautions. En effet, la réaction de reformage interne, à savoir CH₄ + H₂O → 3 H₂ + CO, catalysée par le cermet Nickel-zircone de l'électrode H₂, est fortement endothermique, alors que la réaction d'oxydation de l'hydrogène au sein de la pile est fortement exothermique. Le mode pile peut donc être soit endothermique, soit exothermique, et donc à nouveau conduire à de fortes variations de température au sein de l'empilement.

Ainsi, on constate que les fonctions à réaliser sur les empilements de type SOEC/SOFC sont multiples et couplées entre elles. En particulier, le niveau de serrage de l'empilement conditionne la réalisation de plusieurs fonctions, mais le contrôle de ce niveau de serrage peut dépendre de la gestion thermique de l'empilement. En effet, une élévation de température en fonctionnement, par le biais des dilatations différentielles de l'ensemble des composants, peut conduire soit à une perte de serrage, et donc à une perte d'étanchéité et à un mauvais contact électrique, soit à une augmentation du niveau de serrage, qui s'il est trop important, peut endommager la cellule électrochimique.

Des systèmes de serrage connus de l'art antérieur sont décrits dans EP 2 647 076 A1 ou JP 2007 294330 A.

En outre, l'empilement est amené à subir des cycles thermiques entre la température ambiante et une température d'environ 800°C lors des cycles de type marche/arrêt et le niveau de serrage ne doit pas trop varier pendant ce transitoire thermique, sous peine d'une part de dégrader l'étanchéité et d'autre part d'introduire un cycle thermomécanique endommageant.

Des solutions ont déjà été envisagées dans l'art antérieur pour pallier à ces besoins et inconvénients. De façon classique, la solution principalement mise en oeuvre consiste à déporter en zone froide un système de type vis/écrou associé à un jeu de rondelles élastiques ou de ressorts de manière à compenser élastiquement toute déformation pour maintenir l'effort quasiment constant.

Toutefois, le déport en zone froide présente plusieurs inconvénients majeurs détaillés ci-après. Tout d'abord, il nécessite un long déport par des tiges de serrage en dehors de la zone chaude pour maintenir un gradient de température entre la température de fonctionnement, typiquement de l'ordre de 800°C, et la zone de serrage des rondelles devant rester élastiques et donc à plus basse température, typiquement de l'ordre de 20 à 300°C. De plus, cette longueur de déport hors zone chaude peut être problématique notamment dans le cadre d'un fonctionnement en pression au sein d'une enceinte. Cela a pour conséquence de compliquer considérablement le passage de ces colonnes de serrage car il faut alors gérer : soit le passage de l'effort de serrage en dehors de l'enceinte sous pression et en température, typiquement 800°C, par des soufflets par exemple ; soit le maintien de l'effort à l'intérieur d'une enceinte sous pression refroidie, typiquement de 20 à 300°C, conduisant alors à un volume en pression bien plus important.

### EXPOSÉ DE L'INVENTION

L'invention a pour but de remédier au moins partiellement aux besoins mentionnés précédemment et aux inconvénients relatifs aux réalisations de l'art antérieur.

Elle vise notamment la réalisation d'une conception particulière d'un empilement d'électrolyse à haute température (SOEC) ou de pile à combustible (SOFC), et plus spécifiquement à concevoir un serrage autonome d'un tel empilement permettant l'application de l'effort à la fabrication de l'empilement et le maintien de ce même effort, y compris en fonctionnement à haute température.

L'invention a ainsi pour objet un ensemble comportant un système de serrage autonome d'un empilement à oxydes solides de type SOEC/SOFC fonctionnant à haute température tel que revendiqué dans la revendication 1.

De façon avantageuse, le système de serrage selon l'invention présente un aspect de type « Plug and Play » (PnP), soit de type « branche et utilise », car il permet l'installation rapide de l'empilement au sein d'un système et son démarrage sans avoir à gérer son serrage en fonctionnement, notamment aux environs de 800°C à haute température, malgré les dilatations différentielles des différents composants.

De plus, la plaque de serrage supérieure et la plaque de serrage inférieure peuvent présenter chacune une épaisseur comprise entre 20 et 30 mm, notamment de l'ordre de 25 mm.

Ladite au moins une tige de serrage est préférentiellement filetée. De plus, les moyens de serrage peuvent comporter, au niveau de chaque orifice de serrage de l'une des plaques de serrage supérieure et inférieure, au moins un deuxième écrou de serrage destiné à coopérer avec ladite au moins une tige de serrage insérée au travers de l'orifice de serrage.

Par ailleurs, ladite au moins une tige de serrage, et lesdits au moins un premier et un deuxième écrous de serrage sont préférentiellement réalisés en superalliage à base de nickel de type Inconel 625. De cette façon, il peut être possible de garantir un comportement élastique et donc d'éviter tout fluage ou relaxation malgré les niveaux de température considérés.

En outre, ladite au moins une rondelle de serrage est préférentiellement réalisée en acier austénitique réfractaire de type AISI 310. L'épaisseur de la ou des rondelles de serrage peut avantageusement être ajustée en fonction du nombre de cellules électrochimiques présentes dans l'empilement à oxydes solides de type SOEC/SOFC.

Par ailleurs, chacune des plaques de serrage supérieure et inférieure peut préférentiellement comporter au moins deux orifices de serrage, notamment quatre orifices de serrage. Le système de serrage peut alors comporter :
- au moins deux tiges de serrage, notamment quatre tiges de serrage, destinées chacune à s'étendre au travers d'un orifice de serrage de la plaque de serrage supérieure et au travers d'un orifice de serrage correspondant de la plaque de serrage inférieure pour permettre l'assemblage entre elles des plaques de serrage supérieure et inférieure,
- des moyens de serrage au niveau de chaque orifice de serrage des plaques de serrage supérieure et inférieure destinés à coopérer avec lesdites au moins deux tiges de serrage pour permettre l'assemblage entre elles des plaques de serrage supérieure et inférieure.

Lesdites au moins deux tiges de serrage sont préférentiellement filetées, et les moyens de serrage peuvent comporter, au niveau de chaque orifice de serrage de l'une des plaques de serrage supérieure et inférieure, un deuxième écrou de serrage destiné à coopérer avec la tige de serrage insérée au travers de l'orifice de serrage, et peuvent comporter, au niveau de chaque orifice de serrage de l'autre des plaques de serrage supérieure et inférieure, un premier écrou de serrage associé à une rondelle de serrage destinés à coopérer avec la tige de serrage insérée au travers de l'orifice de serrage, la rondelle de serrage étant notamment située entre le premier écrou de serrage et l'autre des plaques de serrage supérieure et inférieure.

En outre, ladite au moins une plaque d'isolation électrique est préférentiellement réalisée en mica. Cette plaque d'isolation électrique joue le rôle de cale d'isolation électrique entre l'empilement à oxydes solides de type SOEC/SOFC et l'une des plaques de serrage inférieure et supérieure, notamment la plaque de serrage supérieure. En effet, en l'absence de celle-ci, le système de serrage étant préférentiellement métallique, il provoquerait un court-circuit global entre le haut et le bas de l'empilement.

L'empilement à oxydes solides de type SOEC/SOFC peut en outre comporter une première couche de contact entre la plaque terminale supérieure et l'ensemble formé par les cellules électrochimiques et les interconnecteurs intermédiaires, et notamment une pluralité de premières couches de contact entre chaque électrode à hydrogène des cellules électrochimiques et chaque interconnecteur intermédiaire ou la plaque terminale supérieure, et une deuxième couche de contact entre la plaque terminale inférieure et l'ensemble formé par les cellules électrochimiques et les interconnecteurs intermédiaires, et notamment une pluralité de deuxièmes couches de contact entre chaque électrode à oxygène des cellules électrochimiques et chaque interconnecteur intermédiaire ou la plaque terminale inférieure.

Les première et deuxième couches de contact permettent avantageusement d'améliorer le passage du courant électrique entre les interconnecteurs intermédiaires et les cellules électrochimiques.

De plus, l'une des première et deuxième couches de contact peut comporter une couche céramique oxyde, en particulier de type manganite de lanthane strontium (ou encore LSM pour « Lanthanum Strontium Manganite » en anglais), et l'autre des première et deuxième couches de contact peut comporter une couche réalisée en nickel, en particulier formée par une grille en nickel.

L'empilement à oxydes solides de type SOEC/SOFC peut en outre comporter au moins deux colonnes de guidage, s'étendant au travers d'orifices de guidage formés dans au moins la plaque terminale supérieure, la plaque terminale inférieure, les interconnecteurs intermédiaires et la plaque de serrage supérieure, et configurées pour permettre le guidage en compression de l'empilement à oxydes solides de type SOEC/SOFC lors de sa fabrication.

Par ailleurs, l'invention a encore pour objet, selon un autre de ses aspects, un procédé de fabrication d'un empilement à oxydes solides de type SOEC/SOFC fonctionnant à haute température, caractérisé en ce qu'il est mis en oeuvre au moyen d'un système de serrage de l'ensemble tel que défini précédemment, le procédé comportant l'étape de fabrication par serrage externe de l'empilement à oxydes solides de type SOEC/SOFC par le biais du système de serrage tel que revendiqué dans la revendication 9.

Le procédé peut encore comporter l'étape, préalable à l'étape de fabrication par serrage externe, de positionnement de l'empilement à oxydes solides de type SOEC/SOFC entre les plaques de serrage supérieure et inférieure du système de serrage avec présence de ladite au moins une plaque d'isolation électrique située entre l'empilement à oxydes solides de type SOEC/SOFC et au moins l'une des plaques de serrage supérieure et inférieure.

L'étape de fabrication par serrage externe comporte avantageusement l'étape de compression (ou d'écrasement) de l'empilement à oxydes solides de type SOEC/SOFC, notamment lors d'une montée en température d'environ 20°C à une température supérieure à 800°C.

La compression appliquée au cours de l'étape de fabrication par serrage externe peut être réalisée par un chargement externe, notamment de type gravitaire, c'est-à-dire au moyen d'une masse, ou par le biais d'un vérin.

De plus, la compression appliquée au cours de l'étape de fabrication par serrage externe peut être d'un poids surfacique compris entre 2 et 2,5 kg/(cm² de cellule électrochimique).

A l'issue d'un refroidissement, notamment jusqu'à la température d'environ 20°C, lors de l'étape de compression de l'empilement à oxydes solides de type SOEC/SOFC, ladite au moins une tige de serrage filetée, ledit au moins un deuxième écrou de serrage, ledit au moins un premier écrou de serrage et ladite au moins une rondelle de serrage peuvent être mis en place sur le système de serrage, lesdits au moins un premier et un deuxième écrous de serrage étant notamment amenés au contact sans serrage supplémentaire. Il est à noter que, lors de l'étape de compression et de l'aller-retour en température, l'épaisseur de l'empilement a avantageusement diminué.

En outre, après mise en place de ladite au moins une tige de serrage filetée, dudit au moins un deuxième écrou de serrage, dudit au moins un premier écrou de serrage et de ladite au moins une rondelle de serrage sur le système de serrage, la compression de l'empilement à oxydes solides de type SOEC/SOFC peut être interrompue, notamment par retrait du chargement externe, de sorte que l'effort préalablement appliqué par serrage est transféré sur les moyens de serrage mis en place. Les moyens de serrage peuvent avantageusement permettre de maintenir en compression l'empilement après le retrait du chargement externe.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
- la figure 1 est une vue schématique montrant le principe de fonctionnement d'un électrolyseur à oxydes solides à haute température (SOEC),
- la figure 2 est une vue schématique éclatée d'une partie d'un électrolyseur à oxydes solides à haute température (SOEC) comprenant des interconnecteurs selon l'art antérieur,
- la figure 3 représente, selon une vue éclatée en perspective et partielle, un exemple d'ensemble comportant un empilement à oxydes solides de type SOEC/SOFC à haute température et un système de serrage de cet empilement conforme à l'invention, et
- les figures 4 à 7 représentent, chacune selon une vue éclatée en perspective et partielle, des variantes de réalisation d'un ensemble comportant un empilement à oxydes solides de type SOEC/SOFC à haute température et un système de serrage de cet empilement conforme à l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Les figures 1 et 2 ont déjà été décrites précédemment dans la partie relative à l'état de la technique antérieure et au contexte technique de l'invention. Il est précisé que, pour ces figures 1 et 2, les symboles et les flèches d'alimentation de vapeur d'eau H₂O, de distribution et de récupération de dihydrogène H₂, d'oxygène O₂, d'air et du courant électrique, sont montrés à des fins de clarté et de précision, pour illustrer le fonctionnement des dispositifs représentés.

En outre, il faut noter que tous les constituants (anode/électrolyte/cathode) d'une cellule électrochimique donnée sont préférentiellement des céramiques. La température de fonctionnement d'un empilement de type SOEC/SOFC haute température est par ailleurs typiquement comprise entre 600 et 1000°C.

De plus, les termes « supérieur » et « inférieur » sont à comprendre ici selon le sens d'orientation normal d'un empilement de type SOEC/SOFC et/ou d'un système de serrage selon l'invention lorsque dans leur configuration d'utilisation.

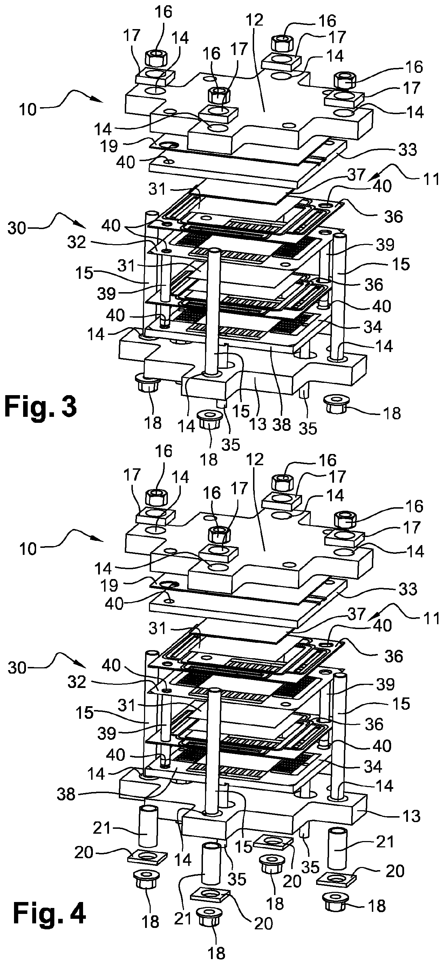

En référence à la figure 3, on a représenté, selon une vue éclatée en perspective et partielle, un exemple d'ensemble 30 comportant un empilement 11 à oxydes solides de type SOEC/SOFC à haute température et un système de serrage 10 autonome de cet empilement 11 conforme à l'invention.

Conformément à l'invention, le système de serrage 10 comporte tout d'abord une plaque de serrage supérieure 12 et une plaque de serrage inférieure 13, entre lesquelles l'empilement 11 à oxydes solides de type SOEC/SOFC est enserré.

Chaque plaque de serrage, supérieure 12 et inférieure 13, comporte une pluralité d'orifices de serrage 14.

De plus, le système de serrage 10 comporte quatre tiges de serrage 15 s'étendant chacune au travers d'un orifice de serrage 14 de la plaque de serrage supérieure 12 et au travers d'un orifice de serrage 14 correspondant de la plaque de serrage inférieure 13 pour permettre l'assemblage entre elles des plaques de serrage supérieure 12 et inférieure 13.

De façon avantageuse, les tiges de serrage 15 sont filetées et présentent une forme cylindrique avec un diamètre supérieur ou égal à 16 mm.

En outre, le système de serrage 10 comporte également des moyens de serrage 16, 17, 18 au niveau de chaque orifice de serrage 14 des plaques de serrage supérieure 12 et inférieure 13 coopérant avec les tiges de serrage 15 pour permettre l'assemblage entre elles des plaques de serrage supérieure 12 et inférieure 13.

Dans cet exemple de la figure 3, ces moyens de serrage comportent, au niveau de chaque orifice de serrage 14 de la plaque de serrage inférieure 13, un deuxième écrou de serrage 18 coopérant avec la tige de serrage 15 correspondante insérée au travers de l'orifice de serrage 14. De plus, les moyens de serrage comportent, au niveau de chaque orifice de serrage 14 de la plaque de serrage supérieure 12, un premier écrou de serrage 16 associé à une rondelle de serrage 17, ceux-ci coopérant avec la tige de serrage 15 correspondante insérée au travers de l'orifice de serrage 14. Comme on peut le voir sur cette figure 3, la rondelle de serrage 17 est située entre le premier écrou de serrage 16 et la plaque de serrage supérieure 12.

De façon avantageuse, la plaque de serrage supérieure 12 et la plaque de serrage inférieure 13 sont réalisées en acier austénitique réfractaire de type AISI 310. Elles présentent chacune une épaisseur de l'ordre de 25 mm.

De plus, les tiges de serrage 15 et les premiers 16 et deuxièmes 18 écrous de serrage sont avantageusement réalisés en superalliage à base de nickel de type Inconel 625. De cette façon, il est possible de garantir un comportement élastique et donc d'éviter tout fluage ou relaxation malgré les niveaux de température envisagés.

Les rondelles de serrage 17 sont quant à elles réalisées en acier austénitique réfractaire de type AISI 310. L'épaisseur des rondelles de serrage 17 peut être ajustée en fonction du nombre de cellules électrochimiques 31 présentes dans l'empilement 11 à oxydes solides de type SOEC/SOFC.
De façon avantageuse, l'invention permet de compenser l'écart de dilatation entre les tiges de serrage 15 en superalliage à base de nickel de type Inconel 625 et l'empilement 11 à oxydes solides de type SOEC/SOFC par la dilatation importante des plaques de serrage inférieure 12 et supérieure 13 et des rondelles de serrage 17 réalisées en acier austénitique réfractaire de type AISI 310.

Par ailleurs, le système de serrage 10 selon l'invention comporte encore, dans cet exemple de la figure 3, une plaque d'isolation électrique 19 entre l'empilement 11 à oxydes solides de type SOEC/SOFC et la plaque de serrage supérieure 12.

Cette plaque d'isolation électrique 19 est avantageusement réalisée en mica. Cette plaque d'isolation électrique 19 joue le rôle de cale d'isolation électrique entre l'empilement 11 à oxydes solides de type SOEC/SOFC et la plaque de serrage supérieure. En effet, en l'absence de celle-ci, le système de serrage 10 étant préférentiellement métallique, il provoquerait un court-circuit global entre le haut et le bas de l'empilement 11.

En outre, l'empilement 11 à oxydes solides de type SOEC/SOFC comporte quant à lui tout d'abord une pluralité de cellules électrochimiques 31 formées chacune d'une cathode, d'une anode et d'un électrolyte intercalé entre la cathode et l'anode, et une pluralité d'interconnecteurs intermédiaires 32 agencés chacun entre deux cellules électrochimiques 31 adjacentes.

De plus, l'empilement 11 comporte aussi une plaque terminale supérieure 33 et une plaque terminale inférieure 34, entre lesquelles la pluralité de cellules électrochimiques 31 et la pluralité d'interconnecteurs intermédiaires 32 sont enserrées.

Dans cet exemple de la figure 3, la plaque terminale supérieure 33 est au contact de la plaque d'isolation électrique 19 du système de serrage 10, tandis que la plaque terminale inférieure 34 est au contact de la plaque de serrage inférieure 13 du système de serrage 10.

Il est à noter que l'épaisseur de chaque interconnecteur intermédiaire 32 est préférablement mince, notamment inférieure ou égale à 1 mm.

De plus, la plaque terminale supérieure 33 et la plaque terminale inférieure 34 présentent chacune une épaisseur de l'ordre de 10 mm.

Par ailleurs, chaque plaque terminale inférieure 34 est traversée par quatre tubes métalliques d'entrée/sortie des gaz produits 35.

En outre, une couche formant cale isolante 36 est située autour de chaque cellule électrochimique 31 et entre chaque interconnecteur intermédiaire 32 adjacents. Cette cale isolante 36 peut avantageusement permettre le centrage de chaque cellule électrochimique 31 et l'isolation électrique entre les interconnecteurs intermédiaires 32. Elle est préférentiellement réalisée en mica. Elle peut également servir de support pour des joints d'étanchéité, notamment en verre.

Comme représenté, l'empilement 11 à oxydes solides de type SOEC/SOFC comporte de plus une première couche de contact 37 entre la plaque terminale supérieure 33 et l'ensemble formé par les cellules électrochimiques 31 et les interconnecteurs intermédiaires 32, et une deuxième couche de contact 38 entre la plaque terminale inférieure 34 et l'ensemble formé par les cellules électrochimiques 31 et les interconnecteurs intermédiaires 32. Plus précisément, bien que non représenté, l'empilement 11 comporte une première couche de contact 37 entre chaque électrode H₂ des cellules électrochimiques 31 et chaque interconnecteur intermédiaire 32 ou plaque terminale supérieure 33, et comporte une deuxième couche de contact 38 entre chaque électrode O₂ des cellules électrochimiques 31 et chaque interconnecteur intermédiaire 32 ou plaque terminale inférieure 34.

Les première 37 et deuxième 38 couches de contact permettent avantageusement d'améliorer le passage du courant électrique entre les interconnecteurs intermédiaires 32 et les cellules électrochimiques 31.

Dans cet exemple de la figure 3, la première couche de contact 37 est formée par une grille en nickel, tandis que la deuxième couche de contact 38 est une couche céramique oxyde de type manganite de lanthane strontium (ou encore LSM pour « Lanthanum Strontium Manganite » en anglais).

Par ailleurs, l'empilement 11 à oxydes solides de type SOEC/SOFC comporte en outre deux colonnes de guidage 39, s'étendant au travers d'orifices de guidage 40 formés dans la plaque terminale supérieure 33, la plaque terminale inférieure 34, les interconnecteurs intermédiaires 32, les cales isolantes 36 et la plaque de serrage supérieure 12. Ces colonnes de guidage 39 sont avantageusement configurées pour permettre le guidage en écrasement de l'empilement 11 à oxydes solides de type SOEC/SOFC par compression lors de sa fabrication.

De plus, il faut noter que l'ensemble des matériaux en acier mis en jeu au sein de l'empilement 11 sont des aciers ferritiques, notamment de type Crofer, AISI 441 et/ou AISI 430, ceci notamment principalement pour des raisons d'adaptation des coefficients de dilatation entre joints en verre, cellules 31 et interconnecteurs 32.

Il peut également être noté, à titre indicatif, l'ordre de grandeur des coefficients de dilatation moyens α utilisés entre 20 et 800°C pour les divers matériaux mentionnés auparavant, à savoir :
- acier ferritique : α = 12.10⁻⁶,
- grille en nickel et Inconel 625 : α = 16.10⁻⁶,
- acier austénitique de type AISI 310 : α = 18.10⁻⁶, et
- manganite de lanthane strontium (LSM) : α = 12.10⁻⁶.

Selon les épaisseurs respectives de chacun des composants de l'empilement 11, l'épaisseur des rondelles de serrage 17 en acier AISI 310 est choisie de manière à garantir que l'ensemble des dilatations des pièces situées entre les écrous de serrage 16 et 18, correspondant à la somme du produit (α × épaisseur) pour chaque composant, est égal ou légèrement supérieur à la dilatation des tiges de serrage filetées 15. Cela garantit alors le maintien du serrage initial quelle que soit la variation de température, voire offre un léger sur-serrage en passant de 20 à 800°C. Ainsi, pour un résultat de test d'un ensemble 30 selon l'invention concluant en termes de contact électrique et d'étanchéité, les rondelles de serrage 17 en AISI 310 présentent une épaisseur d'environ 10 mm pour un nombre de 25 cellules électrochimiques 31.

Grâce à l'invention, il est ainsi possible de gérer le serrage de l'empilement 11 et son maintien en température sans déport en zone froide. Le choix de matériaux et d'épaisseurs des composants du système de serrage 10 permet de conserver ce serrage quelle que soit la température, et ce malgré les dilatations différentielles de chacun des composants de l'empilement 11. De plus, le dimensionnement du système de serrage 10 peut permettre des déformations uniquement élastiques pour garantir les possibilités de cycle thermique. En outre, le système de serrage 10 permet de protéger l'empilement 11 de court-circuits électriques vis-à-vis du reste d'une installation l'intégrant.

Plus spécifiquement, l'invention permet avantageusement l'obtention d'un système de serrage 10 autonome pouvant fonctionner sur toute la plage de température allant de 20 à 900°C, et la conservation du serrage initial mis en place à la fabrication sur tout la plage de température allant de 20 à 900°C. L'invention peut se baser avantageusement sur la compensation de l'écart de dilatation entre superalliage à base de nickel et acier ferritique par de l'acier austénitique réfractaire. Elle n'utilise pas de déport en zone froide garantissant une taille d'empilement compacte sans gradient thermique à assurer. De plus, l'invention peut permettre le déplacement des empilements 11 obtenus d'une installation de fabrication à une autre installation de fabrication destinée à leur fonctionnement. L'invention peut ainsi permettre de fabriquer les empilements 11 à la chaîne indépendamment de leur utilisation. En outre, le système de serrage 10 selon l'invention est flexible, permettant ainsi de s'adapter au nombre de cellules électrochimiques 31 dans l'empilement 11 par ajustement de l'épaisseur des rondelles de serrage 17 en acier austénitique réfractaire. Enfin, le système de serrage 10 selon l'invention peut permettre une gestion de l'isolation électrique de l'empilement 11 vis-à-vis de l'installation de plusieurs empilements 11 simultanément.

Par ailleurs, selon l'installation électrique souhaitée pour l'empilement 11, voire la combinaison de plusieurs empilements 11, différentes configurations peuvent être envisagées pour l'isolation électrique entre le serrage externe et l'empilement 11.

Ainsi, les figures 4 à 7 représentent, chacune selon une vue éclatée en perspective et partielle, des variantes de réalisation d'un ensemble 30 comportant un empilement 11 à oxydes solides de type SOEC/SOFC à haute température et un système de serrage 10 de cet empilement 11 conforme à l'invention, avec isolation de la tringlerie de serrage.

Plus précisément, comme on peut le voir sur ces figures 4 à 7, les moyens de serrage 16, 17, 18, 20, 21 peuvent comporter, au niveau de chaque orifice de serrage 14 de la plaque de serrage supérieure 12 ou inférieure 13 au niveau de laquelle se trouvent les deuxièmes écrous de serrage 18, une rondelle isolante 20 et un tube isolant 21 traversés par la tige de serrage filetée 15 correspondante, insérée au travers de l'orifice de serrage 14, pour permettre la coopération d'assemblage entre la tige de serrage 15 et le deuxième écrou de serrage 18 correspondant. Alors, le tube isolant 21 est situé entre la plaque de serrage supérieure 12 ou inférieure 13 et la rondelle isolante 20, et la rondelle isolante 20 est située entre le tube isolant 21 et le deuxième écrou de serrage 18.

Autrement dit, les exemples de systèmes de serrage 10 des figures 4 à 7 prévoient l'ajout de quatre rondelles isolantes 20 et de quatre tubes isolants 21 de manière à autoriser des potentiels électriques différents entre une plaque de serrage 12, 13 et les tiges de serrage filetées 15.

Les diverses configurations ainsi envisagées par la présente invention, non limitatives, sont détaillées ci-après. Bien entendu, pour des raisons de sécurité, l'installation destinée à recevoir l'ensemble 30 comprenant le système de serrage 10 et l'empilement 11 est relié à la masse.

Dans la configuration décrite précédemment en référence à la figure 3, on considère ainsi que les quatre tubes d'entrée/sortie des gaz produits 35, les plaques de serrage supérieure 12 et inférieure 13, la plaque terminale inférieure 34, les quatre tiges de serrage 15, les rondelles de serrage 17 et les premiers 16 et deuxièmes 18 écrous de serrage sont reliés à la masse. Seul le reste de l'empilement 11 n'est pas à ce potentiel et requiert donc la plaque d'isolation électrique 19 entre la plaque de serrage supérieure 12 et la plaque terminale supérieure 33.

Dans la configuration de la figure 4, à la différence de celle de la figure 3, des rondelles isolantes 20 et des tubes isolants 21 sont prévus au niveau de la plaque de serrage inférieure 13 entre celle-ci et les deuxièmes écrous de serrage 18. Ainsi, cette configuration consiste à modifier la configuration de la figure 3 en souhaitant un autre potentiel pour la plaque de serrage supérieure 12 et le système de serrage 10. Les quatre tubes d'entrée/sortie des gaz produits 35, la plaque terminale inférieure 34 et la plaque de serrage inférieure 13 sont alors reliés à la masse. Les tiges de serrage 15, les rondelles de serrage 17, les écrous de serrage 16 et 18 et la plaque de serrage supérieure 12 peuvent être à un potentiel différent de la masse et différent de celui de l'empilement 11.

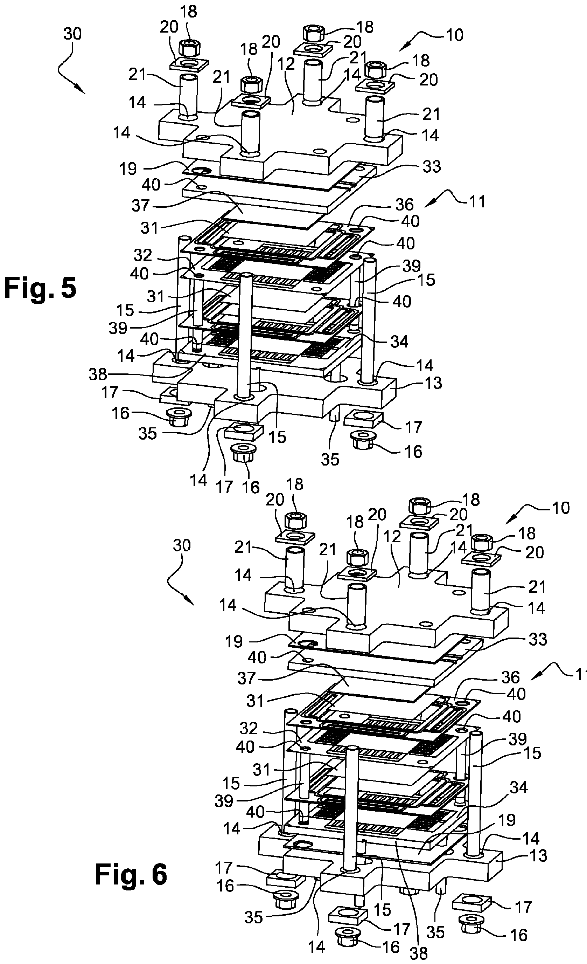

Dans la configuration de la figure 5, à la différence de celle de la figure 4, le positionnement des tubes isolants 21, des rondelles isolantes 20, des rondelles de serrage 17 et des écrous de serrage 16 et 18 est inversé. Ainsi, cette configuration consiste à souhaiter un autre potentiel pour la plaque de serrage supérieure 12. Les quatre tubes d'entrée/sortie des gaz produits 35, la plaque terminale inférieure 34, la plaque de serrage inférieure 13, les tiges de serrage 15, les rondelles de serrage 17 et les écrous 16 et 18 sont reliés à la masse. La plaque de serrage supérieure 12 peut être reliée à un potentiel différent de la masse et différent de celui de l'empilement 11.

Dans la configuration de la figure 6, à la différence de celle de la figure 5, une plaque d'isolation électrique 19 est insérée entre la plaque de serrage inférieure 13 et la plaque terminale inférieure 34.

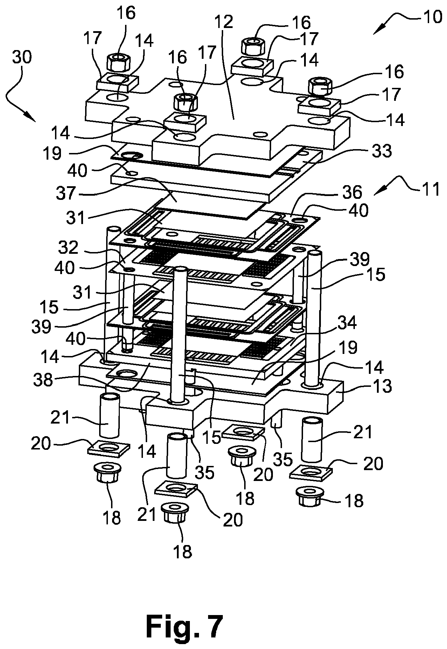

Dans la configuration de la figure 7, à la différence de celle de la figure 4, une plaque d'isolation électrique 19 est également insérée entre la plaque de serrage inférieure 13 et la plaque terminale inférieure 34.

Ainsi, ces configurations des figures 6 et 7 consistent à vouloir isoler complètement l'empilement 11 du système de serrage 10. Il y a ainsi une plaque d'isolation électrique 19 entre l'empilement 11 et chacune des plaques de serrage supérieure 12 et inférieure 13. Si les quatre tubes d'entrée/sortie des gaz produits 35 sont aussi isolés du reste de l'installation, l'empilement 11 est alors dit « en flottant », c'est-à-dire non raccordé à la masse de l'installation. Les rondelles isolantes 20 et les tubes isolants 21 permettent dans ces configurations des figures 6 et 7 de ne pas avoir les deux plaques de serrage 12 et 13 aux mêmes potentiels.

L'ensemble de ces configurations possibles permet aussi d'envisager la superposition de plusieurs empilements 11 indépendants ou non électriquement. De plus, certaines configurations permettent une alimentation électrique sur les écrous des tiges de serrage 15, par exemple par le biais des premiers écrous 16 sur la figure 5. La configuration de la figure 4 permet également par exemple d'alimenter électriquement un deuxième empilement 11 posé sur le dessus du premier empilement 11 par le biais des deuxièmes écrous 18 de ce premier empilement 11.

On va maintenant décrire un exemple de procédé de fabrication d'un empilement 11 à oxydes solides de type SOEC/SOFC fonctionnant à haute température, mettant en oeuvre un système de serrage 10 selon l'invention.

Selon ce procédé, une étape préalable à la fabrication par serrage de l'empilement 11 par le biais du système de serrage 10 consiste en le positionnement de l'empilement 11 entre les plaques de serrage supérieure 12 et inférieure 13 du système de serrage 10 avec la présence de la ou des plaques d'isolation électrique 19 entre l'empilement 11 et une ou deux des plaques de serrage supérieure 12 et inférieure 13.

Ainsi, certaines parties du système de serrage 10 autonome conforme à l'invention sont à placer au moment du montage de l'empilement 11, avant la fabrication proprement dite. En effet, comme décrit ci-après, l'invention vise à maintenir l'effort appliqué par compression, notamment de manière gravitaire ou par vérin, au moment de la fabrication par la tringlerie externe du système de serrage 10, à savoir les tiges de serrage 15, les premiers 16 et deuxièmes 18 écrous de serrage et les rondelles de serrage 17.

L'étape de fabrication par serrage de l'empilement 11 comporte alors une étape de compression de l'empilement 11. Plus précisément, le serrage appliqué au cours de cette étape de fabrication par serrage est réalisé par un chargement externe, notamment préférentiellement de type gravitaire ou par le biais d'un vérin.

Lors de cette compression, les deux colonnes de guidage 39, préférentiellement en céramique, servent de guidage à l'écrasement de l'empilement 11. Le serrage appliqué au cours de l'étape de fabrication par serrage est par exemple d'un poids surfacique compris entre 2 et 2,5 kg/(cm² de cellule électrochimique). Ce serrage permet de déformer les couches de contact 37 et 38, ainsi que les joints d'étanchéité, pour garantir par la suite un bon contact électrique et une bonne étanchéité.

Après conditionnement (en température) sous serrage, préférentiellement gravitaire, les tiges de serrage filetées 15, les premiers 16 et deuxièmes 18 écrous de serrage et les rondelles de serrage 17 sont mis en place sur le système de serrage 10. Il est à noter que les écrous 16 et 18 sont simplement amenés au contact sans serrage supplémentaire.

Alors, le serrage par compression de l'empilement 11 est arrêté et retiré. Il se produit alors le transfert de ce même effort sur la tringlerie du système de serrage 10, en négligeant l'allongement élastique des quatre tiges de serrage 15, d'un diamètre d'environ 16 mm, sous 200 kg.

Alors, l'empilement 11 obtenu peut être déplacé de l'installation de fabrication vers une installation de fonctionnement pour produire par exemple de l'hydrogène, du gaz de synthèse et/ou de l'électricité selon le mode choisi pour cet empilement 11. Il suffit alors de connecter (« plug » en anglais) les quatre tubes métalliques d'entrée/sortie des gaz produits 35 et les alimentations en courant pour pouvoir fonctionner sur l'installation de fonctionnement, conférant au système de serrage 10 selon l'invention un caractère de type « plug and play ».

## Revendications

1. Ensemble (30), comportant:
- un empilement (11) à oxydes solides de type SOEC/SOFC fonctionnant à haute température, comportant :
- une pluralité de cellules électrochimiques (31) formées chacune d'une cathode, d'une anode et d'un électrolyte intercalé entre la cathode et l'anode,
- une pluralité d'interconnecteurs intermédiaires (32) agencés chacun entre deux cellules électrochimiques (31) adjacentes,
- une plaque terminale supérieure (33) et une plaque terminale inférieure (34), entre lesquelles la pluralité de cellules électrochimiques (31) et la pluralité d'interconnecteurs intermédiaires (32) sont enserrées,
- un système de serrage (10) autonome de l'empilement (11) à oxydes solides de type SOEC/SOFC fonctionnant à haute température, comportant :
- une plaque de serrage supérieure (12) et une plaque de serrage inférieure (13), entre lesquelles l'empilement (11) à oxydes solides de type SOEC/SOFC est enserré, comportant chacune au moins un orifice de serrage (14), chacune des plaques terminales supérieure (33) et inférieure (34) étant au contact de l'une des plaques de serrage supérieure (12) et inférieure (13) ou au contact d'au moins une plaque d'isolation électrique (19) du système de serrage (10) située entre l'empilement (11) à oxdes solides de type SOEC/SOFC et au moins l'une des plaques de serrage supérieure (12) et inférieure (13),
- au moins une tige de serrage (15) destinée à s'étendre au travers d'un orifice de serrage (14) de la plaque de serrage supérieure (12) et au travers d'un orifice de serrage (14) correspondant de la plaque de serrage inférieure (13) pour permettre l'assemblage entre elles des plaques de serrage supérieure (12) et inférieure (13),
- des moyens de serrage (16, 17, 18, 20, 21) au niveau de chaque orifice de serrage (14) des plaques de serrage supérieure (12) et inférieure (13) destinés à coopérer avec ladite au moins une tige de serrage (15) pour permettre l'assemblage entre elles des plaques de serrage supérieure (12) et inférieure (13), les moyens de serrage (16, 17, 18, 20, 21) comportant, au niveau de chaque orifice de serrage (14) d'une des plaques de serrage supérieure (12) et inférieure (13), au moins un premier écrou de serrage (16) associé à au moins une rondelle de serrage (17) destinés à coopérer avec ladite au moins une tige de serrage (15) insérée au travers de l'orifice de serrage (14),ladite au moins une tige de serrage (15), et ledit au moins un premier écrou de serrage (16) étant réalisé en superalliage à base de nickel,
ladite au moins une rondelle de serrage (17) étant réalisée en acier austénitique réfractaire et les plaques de serrage supérieure (12) et inférieure (13) étant réalisées en acier austénitique réfractaire.

2. Ensemble selon la revendication 1, **caractérisé en ce que** la plaque de serrage supérieure (12) et la plaque de serrage inférieure (13) présentent chacune une épaisseur comprise entre 20 et 30 mm, notamment de l'ordre de 25 mm.

3. Ensemble selon la revendication 1 ou 2, **caractérisé en ce que** ladite au moins une tige de serrage (15) est filetée, et **en ce que** les moyens de serrage (16, 17, 18, 20, 21) comportent, au niveau de chaque orifice de serrage (14) de l'une des plaques de serrage supérieure (12) et inférieure (13), au moins un deuxième écrou de serrage (18) destiné à coopérer avec ladite au moins une tige de serrage (15) insérée au travers de l'orifice de serrage (14), et comportent, au niveau de chaque orifice de serrage (14) de l'autre des plaques de serrage supérieure (12) et inférieure (13), ledit au moins un premier écrou de serrage (16) associé à ladite au moins une rondelle de serrage (17) destinés à coopérer avec ladite au moins une tige de serrage (15) insérée au travers de l'orifice de serrage (14), ladite au moins une rondelle de serrage (17) étant située entre ledit au moins un premier écrou de serrage (16) et l'autre des plaques de serrage supérieure (12) et inférieure (13).

4. Ensemble selon l'une quelconque des revendications précédentes, caractérisé en ce chacune des plaques de serrage supérieure (12) et inférieure (13) comporte au moins deux orifices de serrage (14), notamment quatre orifices de serrage (14), et en ce qu'il comporte :
- au moins deux tiges de serrage (15), notamment quatre tiges de serrage (15), destinées chacune à s'étendre au travers d'un orifice de serrage (14) de la plaque de serrage supérieure (12) et au travers d'un orifice de serrage (14) correspondant de la plaque de serrage inférieure (13) pour permettre l'assemblage entre elles des plaques de serrage supérieure (12) et inférieure (13),
- des moyens de serrage (16, 17, 18, 20, 21) au niveau de chaque orifice de serrage (14) des plaques de serrage supérieure (12) et inférieure (13) destinés à coopérer avec lesdites au moins deux tiges de serrage (15) pour permettre l'assemblage entre elles des plaques de serrage supérieure (12) et inférieure (13),
lesdites au moins deux tiges de serrage (15) étant filetées, et les moyens de serrage (16, 17, 18, 20, 21) comportant, au niveau de chaque orifice de serrage (14) de l'une des plaques de serrage supérieure (12) et inférieure (13), un deuxième écrou de serrage (18) destiné à coopérer avec la tige de serrage (15) insérée au travers de l'orifice de serrage (14), et comportant, au niveau de chaque orifice de serrage (14) de l'autre des plaques de serrage supérieure (12) et inférieure (13), un premier écrou de serrage (16) associé à une rondelle de serrage (17) destinés à coopérer avec la tige de serrage (15) insérée au travers de l'orifice de serrage (14), la rondelle de serrage (17) étant située entre le premier écrou de serrage (16) et l'autre des plaques de serrage supérieure (12) et inférieure (13).

5. Ensemble selon l'une quelconque des revendications précédentes, **caractérisé en ce que** ladite au moins une plaque d'isolation électrique (19) est réalisée en mica.

6. Ensemble selon l'une quelconque des revendications précédentes, **caractérisé en ce que** l'empilement (11) à oxydes solides de type SOEC/SOFC comporte en outre une première couche de contact (37) entre la plaque terminale supérieure (33) et l'ensemble formé par les cellules électrochimiques (31) et les interconnecteurs intermédiaires (32), et notamment une pluralité de premières couches de contact (37) entre chaque électrode à hydrogène (H₂) des cellules électrochimiques (31) et chaque interconnecteur intermédiaire (32) ou la plaque terminale supérieure (33), et une deuxième couche de contact (38) entre la plaque terminale inférieure (34) et l'ensemble formé par les cellules électrochimiques (31) et les interconnecteurs intermédiaires (32), et notamment une pluralité de deuxièmes couches de contact (38) entre chaque électrode à oxygène (O₂) des cellules électrochimiques (31) et chaque interconnecteur intermédiaire (32) ou la plaque terminale inférieure (34).

7. Ensemble selon la revendication 6, **caractérisé en ce que** l'une des première (37) et deuxième (38) couches de contact comporte une couche céramique oxyde, en particulier de type manganite de lanthane strontium, et **en ce que** l'autre des première (37) et deuxième (38) couches de contact comporte une couche réalisée en nickel, en particulier formée par une grille en nickel.

8. Ensemble selon l'une quelconque des revendications précédentes, **caractérisé en ce que** l'empilement (11) à oxydes solides de type SOEC/SOFC comporte en outre au moins deux colonnes de guidage (39), s'étendant au travers d'orifices de guidage (40) formés dans au moins la plaque terminale supérieure (33), la plaque terminale inférieure (34), les interconnecteurs intermédiaires (32) et la plaque de serrage supérieure (12), et configurées pour permettre le guidage en compression de l'empilement (11) à oxydes solides de type SOEC/SOFC lors de sa fabrication.

9. Procédé de fabrication d'un empilement (11) à oxydes solides de type SOEC/SOFC fonctionnant à haute température d'un ensemble (30) selon l'une quelconque des revendications précédentes, **caractérisé en ce qu'**il est mis en oeuvre au moyen du système de serrage (10) de l'ensemble (30) selon l'une quelconque des revendications précédentes, le procédé comportant l'étape de fabrication par serrage externe de l'empilement (11) à oxydes solides de type SOEC/SOFC par le biais du système de serrage (10).

10. Procédé selon la revendication 9, **caractérisé en ce qu'**il comporte l'étape, préalable à l'étape de fabrication par serrage externe, de positionnement de l'empilement (11) à oxydes solides de type SOEC/SOFC entre les plaques de serrage supérieure (12) et inférieure (13) du système de serrage (10) avec présence de ladite au moins une plaque d'isolation électrique (19) située entre l'empilement (11) à oxydes solides de type SOEC/SOFC et au moins l'une des plaques de serrage supérieure (12) et inférieure (13).

11. Procédé selon la revendication 9 ou 10, **caractérisé en ce que** l'étape de fabrication par serrage externe comporte l'étape de compression de l'empilement (11) à oxydes solides de type SOEC/SOFC, notamment lors d'une montée en température d'environ 20°C à une température supérieure à 800°C.

12. Procédé selon la revendication 11, **caractérisé en ce que** la compression appliquée au cours de l'étape de fabrication par serrage externe est réalisée par un chargement externe, notamment de type gravitaire ou par le biais d'un vérin.

13. Procédé selon la revendication 11 ou 12, **caractérisé en ce que** la compression appliquée au cours de l'étape de fabrication par serrage externe est d'un poids surfacique compris entre 2 et 2,5 kg/(cm² de cellule électrochimique).

14. Procédé selon l'une quelconque des revendications 11 à 13, **caractérisé en ce que** ladite au moins une tige de serrage (15) du système de serrage (10) est filetée et que les moyens de serrage (16, 17, 18, 20, 21) comportent, au niveau de chaque orifice de serrage (14) de l'une des plaques de serrage supérieure (12) et inférieure (13), au moins un deuxième écrou de serrage (18) destiné à coopérer avec ladite au moins une tige de serrage (15) insérée au travers de l'orifice de serrage (14), et comportent, au niveau de chaque orifice de serrage (14) de l'autre des plaques de serrage supérieure (12) et inférieure (13), au moins un premier écrou de serrage (16) associé à au moins une rondelle de serrage (17) destinés à coopérer avec ladite au moins une tige de serrage (15) insérée au travers de l'orifice de serrage (14), ladite au moins une rondelle de serrage (17) étant située entre ledit au moins un premier écrou de serrage (16) et l'autre des plaques de serrage supérieure (12) et inférieure (13),
et **en ce que**, à l'issue d'un refroidissement, notamment jusqu'à la température d'environ 20°C, lors de l'étape de compression de l'empilement (11) à oxydes solides de type SOEC/SOFC, ladite au moins une tige de serrage filetée (15), ledit au moins un deuxième écrou de serrage (18), ledit au moins un premier écrou de serrage (16) et ladite au moins une rondelle de serrage (17) sont mis en place sur le système de serrage (10), lesdits au moins un premier (16) et un deuxième (18) écrous de serrage étant notamment amenés au contact sans serrage supplémentaire.

15. Procédé selon la revendication 14, **caractérisé en ce qu'**après mise en place de ladite au moins une tige de serrage filetée (15), dudit au moins un deuxième écrou de serrage (18), dudit au moins un premier écrou de serrage (16) et de ladite au moins une rondelle de serrage (17) sur le système de serrage (10), la compression de l'empilement (11) à oxydes solides de type SOEC/SOFC est interrompue, notamment par retrait du chargement externe, de sorte que l'effort préalablement appliqué par serrage est transféré sur les moyens de serrage (16, 17, 18) mis en place.

## Patentansprüche

1. Baugruppe (30), umfassend:
- einen auf hoher Temperatur arbeitenden Festoxid-Stapel (11) vom Typ SOEC/SOFC, umfassend:
-- eine Vielzahl von elektrochemischen Zellen (31), die jeweils aus einer Kathode, einer Anode und einem zwischen der Kathode und der Anode eingefügten Elektrolyten gebildet sind,
-- eine Vielzahl von Zwischenverbindern (32), die jeweils zwischen zwei benachbarten elektrochemischen Zellen (31) eingerichtet sind,
-- eine obere Endplatte (33) und eine untere Endplatte (34), zwischen denen die Vielzahl von elektrochemischen Zellen (31) und die Vielzahl von Zwischenverbindern (32) eingespannt sind,
- ein eigenständiges Spannsystem (10) für den auf hoher Temperatur arbeitenden Festoxid-Stapel (11) vom Typ SOEC/SOFC, umfassend:
-- eine obere Spannplatte (12) und eine untere Spannplatte (13), zwischen denen der Festoxid-Stapel (11) vom Typ SOEC/SOFC eingespannt ist, welche jeweils mindestens eine Spannöffnung (14) umfassen, wobei jede aus der oberen (33) und der unteren Endplatte (34) mit einer aus der oberen (12) und der unteren Spannplatte (13) in Kontakt steht oder mit mindestens einer elektrisch isolierenden Platte (19) des Spannsystems (10), die sich zwischen dem Festoxid-Stapel (11) vom Typ SOEC/SOFC und mindestens einer aus der oberen (12) und der unteren Spannplatte (13) befindet, in Kontakt steht,
-- mindestens einen Spannstift (15), der dazu bestimmt ist, sich durch eine Spannöffnung (14) der oberen Spannplatte (12) und durch eine entsprechende Spannöffnung (14) der unteren Spannplatte (13) zu erstrecken, um das Zusammenfügen der oberen (12) und der unteren Spannplatte (13) zu ermöglichen,
- Spannmittel (16, 17, 18, 20, 21) im Bereich jeder Spannöffnung (14) der oberen (12) und der unteren Spannplatte (13), die dazu bestimmt sind, mit dem mindestens einen Spannstift (15) zusammenzuwirken, um das Zusammenfügen der oberen (12) und der unteren Spannplatte (13) zu ermöglichen, wobei die Spannmittel (16, 17, 18, 20, 21) im Bereich jeder Spannöffnung (14) einer aus der oberen (12) und der unteren Spannplatte (13) mindestens eine erste Spannmutter (16) in Kombination mit mindestens einer Spannscheibe (17) umfassen, die dazu bestimmt sind, mit dem durch die Spannöffnung (14) gesteckten mindestens einen Spannstift (15) zusammenzuwirken, wobei der mindestens eine Spannstift (15) und die mindestens eine erste Spannmutter (16) aus Superlegierung auf Nickelbasis hergestellt sind,
wobei die mindestens eine Spannscheibe (17) aus hitzebeständigem austenitischem Stahl hergestellt ist, und die obere (12) und die untere Spannplatte (13) aus hitzebeständigem austenitischem Stahl hergestellt sind.

2. Baugruppe nach Anspruch 1, **dadurch gekennzeichnet, dass** die obere Spannplatte (12) und die untere Spannplatte (13) jeweils eine Dicke im Bereich zwischen 20 und 30 mm, insbesondere in der Größenordnung von 25 mm, aufweisen.

3. Baugruppe nach Anspruch 1 oder 2, **dadurch gekennzeichnet, dass** der mindestens eine Spannstift (15) ein Gewinde aufweist, und dadurch, dass die Spannmittel (16, 17, 18, 20, 21) im Bereich jeder Spannöffnung (14) einer aus der oberen (12) und der unteren Spannplatte (13) mindestens eine zweite Spannmutter (18) umfassen, die dazu bestimmt ist, mit dem mindestens einen durch die Spannöffnung (14) gesteckten Spannstift (15) zusammenzuwirken, und im Bereich jeder Spannöffnung (14) der anderen aus der oberen (12) und der unteren Spannplatte (13) die mindestens eine erste Spannmutter (16) in Kombination mit der mindestens einen Spannscheibe (17) umfassen, welche dazu bestimmt sind, mit dem mindestens einen durch die Spannöffnung (14) gesteckten Spannstift (15) zusammenzuwirken, wobei sich die mindestens eine Spannscheibe (17) zwischen der mindestens einen ersten Spannmutter (16) und der anderen aus der oberen (12) und der unteren Spannplatte (13) befindet.

4. Baugruppe nach einem der vorstehenden Ansprüche, **dadurch gekennzeichnet, dass** jede aus der oberen (12) und der unteren Spannplatte (13) mindestens zwei Spannöffnungen (14), insbesondere vier Spannöffnungen (14), umfasst, und dadurch, dass sie Folgendes umfasst:
- mindestens zwei Spannstifte (15), insbesondere vier Spannstifte (15), die jeweils dazu bestimmt sind, sich durch eine Spannöffnung (14) der oberen Spannplatte (12) und durch eine entsprechende Spannöffnung (14) der unteren Spannplatte (13) zu erstrecken, um das Zusammenfügen der oberen (12) und der unteren Spannplatte (13) zu ermöglichen,
- Spannmittel (16, 17, 18, 20, 21) im Bereich jeder Spannöffnung (14) der oberen (12) und der unteren Spannplatte (13), die dazu bestimmt sind, mit den mindestens zwei Spannstiften (15) zusammenzuwirken, um das Zusammenfügen der oberen (12) und der unteren Spannplatte (13) zu ermöglichen,
wobei die mindestens zwei Spannstifte (15) ein Gewinde aufweisen, und die Spannmittel (16, 17, 18, 20, 21) im Bereich jeder Spannöffnung (14) einer aus der oberen (12) und der unteren Spannplatte (13) eine zweite Spannmutter (18) umfassen, die dazu bestimmt ist, mit dem durch die Spannöffnung (14) gesteckten Spannstift (15) zusammenzuwirken, und im Bereich jeder Spannöffnung (14) der anderen aus der oberen (12) und der unteren Spannplatte (13) eine erste Spannmutter (16) in Kombination mit einer Spannscheibe (17) umfassen, welche dazu bestimmt sind, mit dem durch die Spannöffnung (14) gesteckten Spannstift (15) zusammenzuwirken, wobei sich die Spannscheibe (17) zwischen der ersten Spannmutter (16) und der anderen aus der oberen (12) und der unteren Spannplatte (13) befindet.

5. Baugruppe nach einem der vorstehenden Ansprüche, **dadurch gekennzeichnet, dass** die mindestens eine elektrisch isolierende Platte (19) aus Glimmer hergestellt ist.

6. Baugruppe nach einem der vorstehenden Ansprüche, **dadurch gekennzeichnet, dass** der Festoxid-Stapel (11) vom Typ SOEC/SOFC weiter eine erste Kontaktschicht (37) zwischen der oberen Endplatte (33) und der von den elektrochemischen Zellen (31) und den Zwischenverbindern (32) gebildeten Baugruppe, und insbesondere eine Vielzahl von ersten Kontaktschichten (37) zwischen jeder Wasserstoff- (H₂) Elektrode der elektrochemischen Zellen (31) und jedem Zwischenverbinder (32) oder der oberen Endplatte (33), und eine zweite Kontaktschicht (38) zwischen der unteren Endplatte (34) und der von den elektrochemischen Zellen (31) und den Zwischenverbindern (32) gebildeten Baugruppe, und insbesondere eine Vielzahl von zweiten Kontaktschichten (38) zwischen jeder Sauerstoff- (O₂) Elektrode der elektrochemischen Zellen (31) und jedem Zwischenverbinder (32) oder der unteren Endplatte (34) umfasst.

7. Baugruppe nach Anspruch 6, **dadurch gekennzeichnet, dass** eine aus der ersten (37) und der zweiten Kontaktschicht (38) eine oxidkeramische Schicht, insbesondere vom Typ Lanthan-Strontium-Manganit, umfasst, und dadurch, dass die andere aus der ersten (37) und der zweiten Kontaktschicht (38) eine aus Nickel hergestellte Schicht umfasst, die insbesondere von einem Gitter aus Nickel gebildet wird.

8. Baugruppe nach einem der vorstehenden Ansprüche, **dadurch gekennzeichnet, dass** der Festoxid-Stapel (11) vom Typ SOEC/SOFC weiter mindestens zwei Führungssäulen (39) umfasst, die sich durch in mindestens der oberen Endplatte (33), der unteren Endplatte (34), den Zwischenverbindern (32) und der oberen Spannplatte (12) gebildete Führungsöffnungen (40) erstrecken und dafür ausgelegt sind, die Führung unter Kompression des Festoxidstapels (11) vom Typ SOEC/SOFC bei dessen Herstellung zu ermöglichen.

9. verfahren zur Herstellung eines bei hoher Temperatur arbeitenden Festoxid-Stapels (11) vom Typ SOEC/SOFC für eine Baugruppe (30) nach einem der vorstehenden Ansprüche, **dadurch gekennzeichnet, dass** es mittels des Spannsystems (10) für die Baugruppe (30) nach einem der vorstehenden Ansprüche umgesetzt wird, wobei das Verfahren den Schritt des Herstellens durch Spannen des Festoxid-Stapels (11) vom Typ SOEC/SOFC von außen mithilfe des Spannsystems (10) umfasst.

10. Verfahren nach Anspruch 9, **dadurch gekennzeichnet, dass** es vor dem Schritt des Herstellens durch Spannen von außen den Schritt des Positionierens des Festoxid-Stapels (11) vom Typ SOEC/SOFC zwischen der oberen (12) und der unteren Spannplatte (13) des Spannsystems (10) in Gegenwart der mindestens einen elektrisch isolierenden Platte (19), die sich zwischen dem Festoxid-Stapel (11) vom Typ SOEC/SOFC und mindestens einer aus der oberen (12) und der unteren Spannplatte (13) befindet, umfasst.

11. Verfahren nach Anspruch 9 oder 10, **dadurch gekennzeichnet, dass** der Schritt des Herstellens durch Spannen von außen den Schritt des Komprimierens des Festoxid-Stapels (11) vom Typ SOEC/SOFC, insbesondere bei einem Temperaturanstieg von etwa 20 °C auf eine Temperatur von mehr als 800 °C, umfasst.

12. Verfahren nach Anspruch 11, **dadurch gekennzeichnet, dass** die während des Schritts des Herstellens durch Spannen von außen angelegte Kompression durch eine Belastung von außen, insbesondere vom Schwerkraft-Typ oder mithilfe eines Zylinders, hergestellt wird.

13. Verfahren nach Anspruch 11 oder 12, **dadurch gekennzeichnet, dass** die während des Schritts des Herstellens durch Spannen von außen angelegte Kompression ein Flächengewicht im Bereich zwischen 2 und 2,5 kg/(cm² elektrochemische Zelle) aufweist.

14. Verfahren nach einem der Ansprüche 11 bis 13, **dadurch gekennzeichnet, dass** der mindestens eine Spannstift (15) des Spannsystems (10) ein Gewinde aufweist, und dass die Spannmittel (16, 17, 18, 20, 21) im Bereich jeder Spannöffnung (14) einer aus der oberen (12) und der unteren Spannplatte (13) mindestens eine zweite Spannmutter (18) umfassen, die dazu bestimmt ist, mit dem mindestens einen durch die Spannöffnung (14) gesteckten Spannstift (15) zusammenzuwirken, und im Bereich jeder Spannöffnung (14) der anderen aus der oberen (12) und der unteren Spannplatte (13) mindestens eine erste Spannmutter (16) in Kombination mit mindestens einer Spannscheibe (17) umfassen, die dazu bestimmt sind, mit dem mindestens einen durch die Spannöffnung (14) gesteckten Spannstift (15) zusammenzuwirken, wobei sich die mindestens eine Spannscheibe (17) zwischen der mindestens einen ersten Spannmutter (16) und der anderen aus der oberen (12) und der unteren Spannplatte (13) befindet,
und dadurch, dass am Ende eines Abkühlens, insbesondere bis auf die Temperatur von etwa 20 °C, bei dem Schritt des Komprimierens des Festoxid-Stapels (11) vom Typ SOEC/SOFC der mindestens eine Spannstift mit Gewinde (15), die mindestens eine zweite Spannmutter (18), die mindestens eine erste Spannmutter (16) und die mindestens eine Spannscheibe (17) an dem Spannsystem (10) angebracht werden, wobei die mindestens eine erste (16) und eine zweite Spannmutter (18) insbesondere ohne zusätzliches Spannen in Kontakt gebracht werden.

15. Verfahren nach Anspruch 14, **dadurch gekennzeichnet, dass** nach dem Anbringen des mindestens einen Spannstifts mit Gewinde (15), der mindestens einen zweiten Spannmutter (18), der mindestens einen ersten Spannmutter (16) und der mindestens einen Spannscheibe (17) am Spannsystem (10) das Komprimieren des Festoxid-Stapels (11) vom Typ SOEC/SOFC insbesondere durch Aufheben der Belastung von außen unterbrochen wird, sodass die zuvor durch Spannen angelegte Kraft auf die angebrachten Spannmittel (16, 17, 18) übertragen wird.

## Claims

1. Assembly (30), comprising:
- an SOEC/SOFC type solid oxide stack (11) operating at high temperature, comprising:
- a plurality of electrochemical cells (31) each composed of a cathode, an anode and an electrolyte intercalated between the cathode and the anode,
- a plurality of intermediate interconnectors (32) each formed between two adjacent electrochemical cells (31),
- an upper terminal plate (33) and a lower terminal plate (34), between which the plurality of electrochemical cells (31) and the plurality of intermediate interconnectors (32) are clamped,
- a standalone clamping system (10) for the SOEC/SOFC type solid oxide stack (11) operating at high temperature, comprising:
- an upper clamping plate (12) and a lower clamping plate (13) between which the SOEC/SOFC type solid oxide stack (11) is clamped, each plate comprising at least one clamping orifice (14), each of the upper terminal plate (33) and the lower terminal plate (34) being in contact with at least one of the upper (12) and lower (13) clamping plates or at least one electrical insulation plate (19) of the clamping system (10) located between the SOEC/SOFC type solid oxide stack (11) and at least one of the upper (12) and lower (13) clamping plates,
- at least one clamping rod (15) that will extend through a clamping orifice (14) in the upper clamping plate (12) and through a corresponding clamping orifice (14) in the lower clamping plate (13) to enable assembly of the upper (12) and the lower (13) clamping plates to each other,
- clamping means (16, 17, 18, 20, 21) at each clamping orifice (14) of the upper (12) and lower (13) clamping plates designed to cooperate with said at least one clamping rod (15) to assemble the upper (12) and lower (13) clamping plates to each other, said clamping means (16, 17, 18, 20, 21) comprising at least one first clamping nut (16) associated with at least one clamping washer (17) at each clamping orifice (14) of one of said upper (12) and lower (13) clamping plates designed to cooperate with said at least one clamping rod (15) inserted through the clamping orifice (14),
said at least one clamping rod (15) and said at least one first (16) clamping nut being made from a super alloy based on nickel,
said at least one clamping washer (17) and said upper clamping (12) and lower (13) clamping plates being made of refractory austenitic steel.

2. Assembly according to claim 1, **characterised in that** the upper clamping plate (12) and the lower clamping plate (13) each have a thickness of between 20 and 30 mm, particularly of the order of 25 mm.

3. Assembly according to claim 1 or 2, **characterised in that** said at least one clamping rod (15) is threaded, and **in that** the clamping means (16, 17, 18, 20, 21) comprise at least one second clamping nut (18) at each clamping orifice (14) in one of the upper (12) and lower (13) clamping plates, designed to cooperate with said at least one clamping rod (15) inserted through the clamping orifice (14), and comprise at least one first clamping nut (16) associated with at least one clamping washer (17) at each clamping orifice (14) in the other among the upper (12) and lower (13) clamping plates, designed to cooperate with said at least one clamping rod (15) inserted through the clamping orifice (14), said at least one clamping washer (17) being located particularly between said at least one first clamping nut (16) and the other among the upper (12) and lower (13) clamping plates.

4. Assembly according to any one of the previous claims, **characterised in that** each of the upper (12) and lower (13) clamping plates comprises at least two clamping orifices (14), particularly four clamping orifices (14) and **in that** it comprises:
- at least two clamping rods (15), particularly four clamping rods (15), each of which will extend through a clamping orifice (14) in the upper clamping plate (12) and through a corresponding clamping orifice (14) in the lower clamping plate (13) to enable assembly of the upper (12) and lower (13) plates to each other,
- clamping means (16, 17, 18, 20, 21) at each clamping orifice (14) in the upper (12) and lower (13) clamping plates designed to cooperate with said at least two clamping rods (15) to assemble the upper (12) and lower (13) clamping plates to each other,
said at least two clamping rods (15) being threaded, and the clamping means (16, 17, 18, 20, 21) comprising a second clamping nut (18) at each clamping orifice (14) in one of the upper (12) and lower (13) clamping plates, designed to cooperate with the clamping rod (15) inserted through the clamping orifice (14), and comprising a first clamping nut (16) associated with a clamping washer (17) at each clamping orifice (14) in the other among the upper (12) and lower (13) clamping plates, designed to cooperate with the clamping rod (15) inserted through the clamping orifice (14), the clamping washer (17) being located between the first clamping nut (16) and the other among the upper (12) and lower (13) clamping plates.

5. Assembly according to any one of the previous claims, **characterised in that** said at least one electrical insulation plate (19) is made of mica.

6. Assembly according to any preceding claim, **characterised in that** the SOEC/SOFC type solid oxide stack (11) also comprises a first contact layer (37) between the upper terminal plate (33) and the assembly composed of the electrochemical cells (31) and the intermediate interconnectors (32), and particularly a plurality of first contact layers (37) between each hydrogen (H₂) electrode of the electrochemical cells (31) and each intermediate interconnector (32) or the upper terminal plate (33), and a second contact layer (38) between the lower terminal plate (34) and the assembly composed of the electrochemical cells (31) and the intermediate interconnectors (32), and particularly a plurality of second contact layers (38) between each oxygen (O₂) electrode of the electrochemical cells (31) and each intermediate interconnector (32) or the lower terminal plate (34).

7. Assembly according to claim 6, **characterised in that** one of the first (37) and second (38) contact layers comprises a ceramic oxide layer, particular of the lanthanum strontium manganite type, and **in that** the other among the first (37) and second (38) contact layers comprises a layer made of nickel, and particularly formed by a nickel grating.

8. Assembly according to any preceding claim, **characterised in that** the SOEC/SOFC type solid oxide stack (11) also comprises at least two guide columns (39) extending through guide orifices (40) formed in at least the upper terminal plate (33), the lower terminal plate (34), the intermediate interconnectors (32) and the upper clamping plate (12), and configured to guide the SOEC/SOFC type solid oxide stack (11) in compression during its fabrication.

9. Method for fabrication of an SOEC/SOFC type solid oxide stack (11) operating at high temperature of an assembly (30) according to any preceding claim, **characterised in that** it makes use of a clamping system (10) of an assembly (30) according to any preceding claim, the method comprising the fabrication step by external clamping of the SOEC/SOFC type solid oxide stack (11) through a clamping system (10).

10. Method according to claim 9, **characterised in that** it comprises the step prior to the fabrication step by external clamping, to position the SOEC/SOFC type solid oxide stack (11) between the upper (12) and lower (13) clamping plates of the clamping system (10) with the presence of said at least one electrical insulation plate (19) located between the SOEC/SOFC type solid oxide stack (11) and at least one of the upper (12) and lower (13) clamping plates.

11. Method according to claim 9 or 10, **characterised in that** the fabrication step by external clamping includes the compression step of the SOEC/SOFC type solid oxide stack (11), particularly when the temperature increases from about 20°C to a temperature of more than 800°C.

12. Method according to claim 11, **characterised in that** the compression applied during the fabrication step by clamping is achieved by an external load, preferably of the gravity type or using a ram.

13. Method according to claim 11 or 12, **characterised in that** the compression applied during the fabrication step by external clamping is a distributed weight equal to between 2 and 2.5 kg/(cm² of electrochemical cell).

14. Method according to any one of claims 11 to 13, **characterised in that** said at least one clamping rod (15) in the clamping system (10) is threaded, and **in that** the clamping means (16, 17, 18, 20, 21) comprise at least one second clamping nut (18) at each clamping orifice (14) in one of the upper (12) and lower (13) clamping plates, designed to cooperate with said at least one clamping rod (15) inserted through the clamping orifice (14), and comprise at least one first clamping nut (16) associated with at least one clamping washer (17) at each clamping orifice (14) in the other among the upper (12) and lower (13) clamping plates, designed to cooperate with said at least one clamping rod (15) inserted through the clamping orifice (14), said at least one clamping washer (17) being located between said at least one first clamping nut (16) and the other among the upper (12) and lower (13) clamping plates,
and **in that**, after cooling particularly to a temperature of about 20°C during the compression step of the SOEC/SOFC solid oxide stack (11), said at least one threaded rod (15), said at least one second clamping nut (18), said at least one first clamping nut (16) and said at least one clamping washer (17) are put into place on the clamping system (10), said at least one first (16) and one (18) second clamping nuts being brought into contact without additional clamping.

15. Method according to claim 14, **characterised in that** after placement of said at least one threaded clamping rod (15), said at least one second clamping nut (18), said at least one first clamping nut (16) and said at least one clamping washer (17) on the clamping system (10), compression of the SOEC/SOFC type solid oxide stack (11) is interrupted, particularly by removing the external load such that the force previously applied by clamping is transferred onto the existing installed clamping means (16, 17, 18).
